# EUROPÄISCHE PATENTSCHRIFT

(11) **EP 2 513 590 B1**
(45) Veröffentlichungstag und Bekanntmachung des Hinweises auf die Patenterteilung: **15.04.2015**
(21) Anmeldenummer: 10805681.3
(22) Anmeldetag: 03.12.2010
(51) Int. Cl.: B60H 1/00, F41H 7/03, F41A 9/37

(54) **TREIBLADUNGSMAGAZIN SOWIE MIT EINEM TREIBLADUNGSMAGAZIN AUSGESTATTETER KAMPFRAUM**
PROPELLANT CHARGE MAGAZINE AND COMBAT COMPARTMENT EQUIPPED WITH A PROPELLANT CHARGE MAGAZINE
MAGASIN À CHARGES PROPULSIVES ET COMPARTIMENT DE COMBAT ÉQUIPÉ DE CE DERNIER

(30) Priorität: 17.12.2009 DE 102009058567
(43) Veröffentlichungstag der Anmeldung: 24.10.2012
(60) Teilanmeldung: 13162053.6
(73) Patentinhaber: Krauss-Maffei Wegmann GmbH & Co. KG, 80997 München (DE)
(72) Erfinder: RACZEK, Matthias, 80997 München (DE); HELDMANN, Heinrich, 80997 München (DE)
(74) Vertreter: Feder Walter Ebert
(86) Internationale Anmeldenummer: PCT/DE2010/075154
(87) Internationale Veröffentlichungsnummer: WO 2011/072673

(56) Entgegenhaltungen:
- EP-A1- 0 637 728
- EP-A2- 1 060 917
- DE-A1- 2 040 285
- DE-A1- 4 134 603
- DE-A1-102004 025 743
- DE-C- 977 753

## Beschreibung

Die Erfindung betrifft ein Treibladungsmagazin sowie einen mit einem Treibladungsmagazin ausgestatteten Kampfraum. Der Kampfraum ist dabei Teil eines mit einem automatischen großkalibrigen Waffensystem ausgerüsteten Schießmoduls oder eines Geschützturmes, beispielsweise eines Kampfpanzers oder einer Panzerhaubitze.

Es ist grundsätzlich bekannt, einen Kampfraum zur Kühlung an ein Luftzuführungssystem anzuschließen.

Ein derartiges Luftzuführungssystem ist beispielsweise in EP 1 060 917 B1 beschrieben. Bei diesem bekannten System wurde versucht, den Kampfraum generell zu kühlen, was im stationären Betrieb eine hohe Kühlleistung erfördert und damit einen großen Bauraum benötigt.

Es ist weiterhin bekannt, an oder in einem Kampfraum ein Treibladungsmagazin anzuordnen mit einem Gehäuse oder Gestell, in dem mehrere Treibladungen gelagert werden können. Bei einem Schießmodul ist dies beispielsweise in DE 10 2004 025 743 A1 beschrieben.

Da Treibladungen in ihrer Funktion sehr empfindlich auf Temperaturänderungen reagieren, bedürfen sie, um die Einsatzbereitschaft eines Geschützes auch in klimatisch heißen Zonen zu gewährleisten, einer besonderen Kühlung, was die insgesamt erforderliche Kühlleistung weiter erhöht.

Der Erfindung liegt die Aufgabe zugrunde, an einem Treibladungsmagazin und/oder in einem Kampfraum eine ausreichende Kühlung sicherzustellen, die vorzugsweise mit einem möglichst geringen Kühlleistungsbedarf erreicht werden soll.

Die Lösung dieser Aufgabe erfolgt erfindungsgemäß mit den Merkmalen der Patentansprüche 1 und 4. Vorteilhafte Weiterbildungen der Erfindung sind in den abhängigen Ansprüchen beschrieben.

Ein erfindungsgemäßes Treibladungsmagazin mit einem Magazingehäuse, in dem mehrere Treibladungen anordbar sind, ist derart ausgestaltet, dass in dem Treibladungsmagazin oder in seiner unmittelbaren Nähe zur Kühlung der Treibladungen eine Vorrichtung zur Verteilung und/oder Abgabe von Kühlluft angeordnet ist. Bevorzugt ist diese Vorrichtung zur Verteilung und/oder Abgabe von Kühlluft an ein externes Kühlluftverteilungssystem anschließbar. Das Treibladungsmagazin kann als Treibladungskasette ausgestaltet sein.

Erfindungsgemäß weist das Treibladungsmagazin auch einen Kühlluftanschluss zur Einleitung von Kühlluft in das Magazingehäuse auf.

Durch die beschriebenen Ausgestaltungen ist es möglich, Kühlluft in das Treibladungsmagazin einzuleiten und dort zu verteilen, so dass die Treibladungen insbesondere auf eine definierte Temperatur gekühlt werden können.

Besonders bevorzugt ist die Vorrichtung zur Verteilung und/oder Abgabe von Kühlluft in der oberen Hälfte des Magazingehäuses angeordnet, wobei in der unteren Hälfte des Magazingehäuses mindestens eine Luftaustrittsöffnung angeordnet ist, über welche die Kühlluft aus dem Magazingehäuse herausführbar ist. Diese Anordnung bietet den Vorteil, dass die natürliche Zirkulation der kühlen Luft, die nach unten fällt, berücksichtigt wird.

In vorteilhafter Weise kann im Bereich des Treibladungsmagazins eine Vorrichtung zur Verteilung und/oder Abgabe von Kühlluft angeordnet sein, die über eine Luftzuführungsleitung an ein im Kampfraumgehäuse angeordnetes Kühlluftverteilungssystem angeschlossen ist. Auf diese Art kann somit die Kühlluft in das Treibladungsmagazingehäuse eingeblasen werden.

Mittels einer Luftzuführungsleitung kann die Kühlluft über einen Kühlluftanschluss, insbesondere eine Öffnung in dem Magazirigehäuse, von dem Kühlluftverteilungssystem des Kampfraumgehäuses zu der Vorrichtung zur Verteilung und/oder Abgabe von Kühlluft zugeführt werden.

Die Luftaustrittsöffnungen des Magazingehäuses können an einer dem Innenraum des Kampfraumgehäuses zugewandten Seite des Magazingehäuses angeordnet sein. Auf diese Art ist es möglich, die Kühlluft, die das Treibladungsmagazin verlässt, zur weiteren Nutzung in den Kampfraum geleitet wird, um auch diesen zu kühlen.

Besonders bevorzugt ist die Vorrichtung zur Verteilung und/oder Abgabe von Kühlluft über eine lösbare Kupplung mit dem Kühlluftverteilungssystem verbindbar. Hierdurch kann auch der Vorteil realisiert werden, dass das Magazingehäuse an einer Außenwand des Kampfraumgehäuses abnehmbar oder abschwenkbar angeordnet ist, so dass dieses beispielsweise zum Aufmunitionieren ausgetauscht werden kann.

Eine vorteilhafte Weiterbildung besteht darin, die Temperatur im Magazin und/oder der Treibladungen mit einem Temperatursensor zu ermitteln. Bevorzugt wird eine Treibladung mit einem Temperatursensor versehen, mittels dessen die Temperatur der Treibladung bestimmt werden kann. Durch eine Temperaturmessung ist ein Verfahren durchführbar, bei dem die Temperatur der Treibladung bis kurz vor dem Abschuss automatisch gemessen und der Temperaturwert in den Feuerleitrechner zur Ermittlung einer Feuerleitlösung eingegeben werden kann. Durch die Temperaturmessung kann ferner die Temperatur im Magazin geregelt werden. Hierzu kann die gemessene Temperatur einer Regeleinrichtung zugeführt werden, die mit der Vorrichtung zur Verteilung und/oder Abgabe von Kühlluft verbunden ist. Die Temperatursignale können zur Auswertung insbesondere per Funk an eine Empfangseinheit oder an die Regeleinrichtung gesendet werden.

Der Temperatursensor kann im Magazingehäuse des Treibladungsmagazins angeordnet sein. Der Temperatursensor kann auch an der Außenseite beispielsweise der Stirnseite der Treibladung angeordnet sein, wobei er dort aufgeklebt oder in anderer Weise befestigt sein kann. Der Temperatursensor kann auch im Innenraum der Treibladung angeordnet sein, was eine besonders genaue Bestimmung der Kerntemperatur ermöglicht.

Bei einer besonders vorteilhaften Ausführungsform der Treibladung ist der Temperatursensor mit einer Sendeeinheit insbesondere einem RFID-Chip (RFID: radio frequency identification) zum Senden eines Temperatursignals verschaltet. Diese Ausbildung eröffnet die Möglichkeit, jederzeit drahtlos die Temperatur der Treibladung abzufragen, ein Temperatursignal zu erzeugen und dies dem Feuerleitrechner zuzuführen. Zu diesem Zweck kann eine Vorrichtung zur Ermittlung einer Feuerleitlösung unter Berücksichtigung der Temperatur der Treibladung eine Empfangseinheit zum Empfang des Temperatursignals aufgrund der durch den Temperatursensor gemessenen Temperatur der Treibladung aufweisen.

Ein erfindungsgemäßes Schließmodul, insbesondere Turm einer Panzerhaubitze oder eines Kampfpanzers weist ein Kampfraum mit einem Kampfraumgehäuse auf, wobei ein im Kampfraumgehäuse angeordnetes Kühlluftverteilungssystem eine Luftaustrittsöffnung besitzt, die in einem oberen Bereich des Kampfraumgehäuses derart angeordnet ist, dass die Kühlluft in mindestens einen Seitenbereich des Kampfraumgehäuses hineinführbar ist, wobei der Kampfraum derart ausgestaltet ist, dass mittels mindestens einer Leitfläche die Kühlluft im Seitenbereich des Kampfraumgehäuses nach unten führbar und im Mittenbereich des Kampfraumgehäuses nach oben führbar ist.

Die Luftaustrittsvorrichtung des Kühlverteitungssystems kann unter dem Dach des Kampfraumgehäuses angeordnet sein. Somit kann die Kühlluft im Seitenbereich aufgrund der natürlichen Thermik nach unten sacken und sich aufwärmen, wobei die wärmere Luft dann im Mittenbereich des Fahrzeugs nach oben steigen kann. Insgesamt wird hierdurch eine gute Kühlluftverteilung im Kampfraum erreicht.

Bevorzugt ist die Kühlluft im oberen Mittenbereich über eine Abluftöffnung aus dem Kampfraumgehäuse herausführbar.

Die Abluftöffnung kann in einer auf dem Kampfraumgehäuse angeordneten, insbesondere ballistisch geschützten Ablufteinrichtung angeordnet sein. In der Ablufteinrichtung kann ein Axiallüfter angeordnet sein, so dass die Kühlluft aktiv aus dem Kampfraum herausgeführt wird. Die Ablufteinrichtung kann ferner ein auf dem Dach des Kampfraumgehäuses geführtes und am Außenrand des Daches nach unten abgebogenes Abluftrohr aufweisen. Besonders bevorzugt sind in diesem Abluftrohr Filter und/oder Strömungshindernisse wie Schikanen angeordnet. Diese dienen zur Vermeidung, dass ggf. kontaminierte Umgebungsluft in einfacher bzw. ungefilterter Weise in den Kampfraum gelangen kann.

Die Kühlluft kann von der Luftaustrittsvorrichtung des Magazingehäuses in den von dem Magazingehäuse abgewandten Seitenbereich des Kampfraumgehäuses geführt werden. Somit kann die durch das Treibladungsmagazin strömende Kühlluft zur Kühlung des Kampfraumes verwendet werden.

Die Luftaustrittsvorrichtung kann ferner an eine Zuführungsleitung angeschlossen sein, die vom Bodenbereich des Kampfraumgehäuses bis in eine vorgegebene Höhe über dem Gehäuseboden geführt ist.

Besonders bevorzugt wird die Kühlluft in beide Seitenbereiche eingeleitet, so dass diese in beiden Seitenbereichen des Kampfraumes nach unten führbar ist.

Besonders vorteilhaft ist es, wenn die Luftzuführungsleitung zum Treibladungsmagazin im Bodenbereich des Kampfraumgehäuses an die Zuführungsleitung des Kampfraumgehäuses angeschlossen ist.

Durch die Erfindung kann durch gezielte Kühlung der Vorteil erreicht werden, dass jedenfalls im Bereich des Treibladungsmagazins die Temperatur im Kampfraum einen zulässigen Höchstwert nicht überschreitet. Ein weiterer Vorteil besteht darin, im Kampfraum durch eine möglichst optimale Anordnung einer Luftaustrittsvorrichtung für Kühlluft und eine geschickte Führung der den Kampfraum durchströmenden Kühlluft zu erreichen, dass das oben genannte Ziel einer möglichst geringen Kühlleistung erreicht wird. Durch den direkten Anschluss des kühlbaren Treibladungsmagazins an das Kühlsystems des Kampfraumes stellt das Treibladungsmagazin eine Sonderkühlzone im Kampfraum dar, in der auf Grund des geringeren zu kühlenden Volumens tiefere Temperaturen als im Kampfraum vorliegen. Die Kühlluft kann somit dem Treibladungsmagazin zugeführt werden, bevor sie in den Kampfraum eintritt und sich dort erwärmt.

Innerhalb des Kampfraums kann der Bereich des Treibladungsmagazins gezielt gekühlt werden, während der übrige Raum der Zirkulation und dem Wärmeabtransport dient. Durch diese gezielte Kühlung und Abfuhr der Wärme kann die insgesamt erforderliche Kühlleistung erheblich reduziert werden. Zudem kann der Vorteil erreicht werden, die Treibladungen auf einer definierten Temperatur zu halten, so dass die Schussgenauigkeit der Waffe verbessert wird, da die Temperatur der Treibladungen einen Einfluss auf die Ballistik hat.

Im Folgenden wird anhand der beigefügten Figuren 1 bis 7 ein Ausführungsbeispiel für die Erfindung näher erläutert.

In den Zeichnungen zeigen:
- Fig. 1: in einer perspektivischen teilweise explodierten Darstellung ein Schießmodul mit einem an das Schießmodul ansetzbaren Treibladungsmagazin;
- Fig. 2: einen vertikalen Querschnitt durch den Kampfraum des Schießmoduls nach Fig. 1;
- Fig. 3: in perspektivischer Darstellung das an das Schießmodul nach Fig. 1 und Fig. 2 ansetzbare Treibladungsmagazin;
- Fig. 4: einen vertikalen Querschnitt durch das Treibladungsmagazin nach Fig. 3;
- Fig. 5: einen vertikalen in Längsrichtung verlaufenden Teilschnitt durch das Schießmodul nach Fig. 1;
- Fig. 6: das Kühlluftverteilungssystem aus Fig. 2; und
- Fig. 7: das Kühlluftverteilungssystem nach Fig. 6 in einer gedrehten Perspektive.

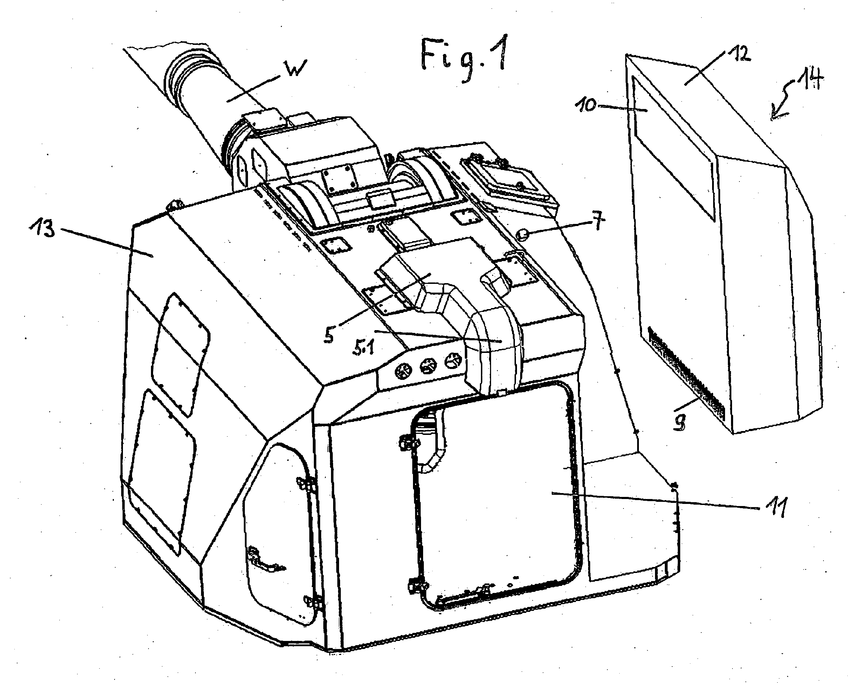

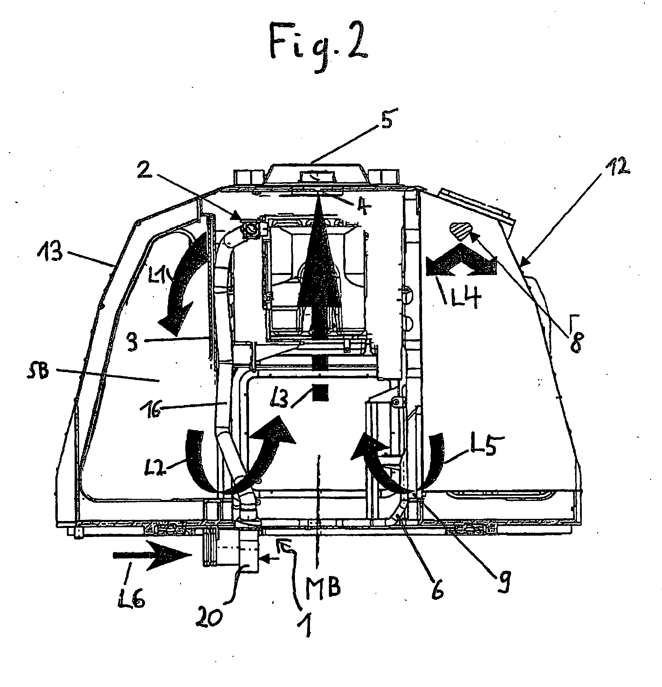

Das in den Figuren 1 und 2 dargestellte kampfraumbildende Schießmodul, das als Turm einer im Übrigen nicht dargestellten Panzerhaubitze ausgebildet sein kann, besitzt ein gepanzertes Kampfraumgehäuse 13, in dem eine schwere Waffe W in Elevation schwenkbar sowie ein Munitionsmagazin angeordnet ist. Im Inneren des Kampfraumgehäuses 13 befindet sich der Kampfraum, der über eine Einstiegstür 11 am Heck des Gehäuses 13 zugänglich ist. An der Außenseite des Kampfraumgehäuses 13 ist an einer Außenwand die innerhalb eines zurückspringenden Bereichs der Kontur des Gehäuses 13 angeordnet ist, ein Treibladungsmagazin 14 mit einem Magazingehäuse 12 anordbar.

Die in dem als Treibladungskasette ausgestalteten Treibladungsmagazin 14 angeordneten Treibladungen 15 können durch nicht dargestellte Zuführungsvorrichtungen aus dem Treibladungsmagazin 14 über eine Öffnung 10 in der dem Gehäuse 13 zugewandten Wand des Magazingehäuses 12 in den Kampfraum befördert und der Waffe W zugeführt werden.

Das Treibladungsmagazin entspricht somit im Wesentlichen dem Treibladungsmagazin aus der DE 10 2004 025 743 A1, wobei die dort beschrieben Ausgestaltung hiermit vollumfänglich in die vorliegende Anmeldung einbezogen wird.

Zusätzlich zu dem in der DE 10 2004 025 743 A1 beschriebenen Treibladungsmagazin ist das erfindungsgemäße Treibladungsmagazin 14 kühlbar. Es weist hierzu einen Kühlluftanschluss 17, eine Vorrichtung 8 zur Abgabe und Verteilung der Kühlluft sowie Luftaustrittsöffnungen 9 auf.

Das Treibladungsmagazin 14 ist an das Kühlluftsystem 1 des Kampfraums anschließbar. Am Magazingehäuse 12 ist hierzu in der oberen Hälfte ein Kühlluftanschluss 17 seitlich angeordnet, der als Stutzen oder einfach als Öffnung, wie eine Bohrung, ausgestaltet sein kann. Über den Kühlluftanschluss 17 wird die Kühlluft zu einer innerhalb des Magazingehäuses 12 angeordneten Vorrichtung 8 zur Abgabe und Verteilung von Kühlluft geleitet, die die Kühlluft innerhalb des Magazingehäuses 12 verteilt und abgibt.

In dem Magazingehäuse 12 ist ein Temperatursensor 27 angeordnet, durch den die Temperatur im Gehäuse 12 ermittelbar ist. Die Temperatur kann einer Regeleinrichtung zugeführt werden, so dass die Temperatur im Gehäuse 12 auf einen vorgegebenen Wert geregelt werden kann. Die Temperatur kann auch mit einem Temperatursensor 28 gemessen werden, der unmittelbar an einer Treibladung 15 angeordnet ist.

In einem Feuerleitrechner kann dann unter Berücksichtigung der Temperatur der Treibladung 15 eine Feuerleitlösung ermittelt werden. Die entsprechenden Zusammenhänge zwischen Temperatur der Treibladung 15 und der Feuerleitlösung insbesondere der Schussweite sind im Feuerleitrechner hinterlegt.

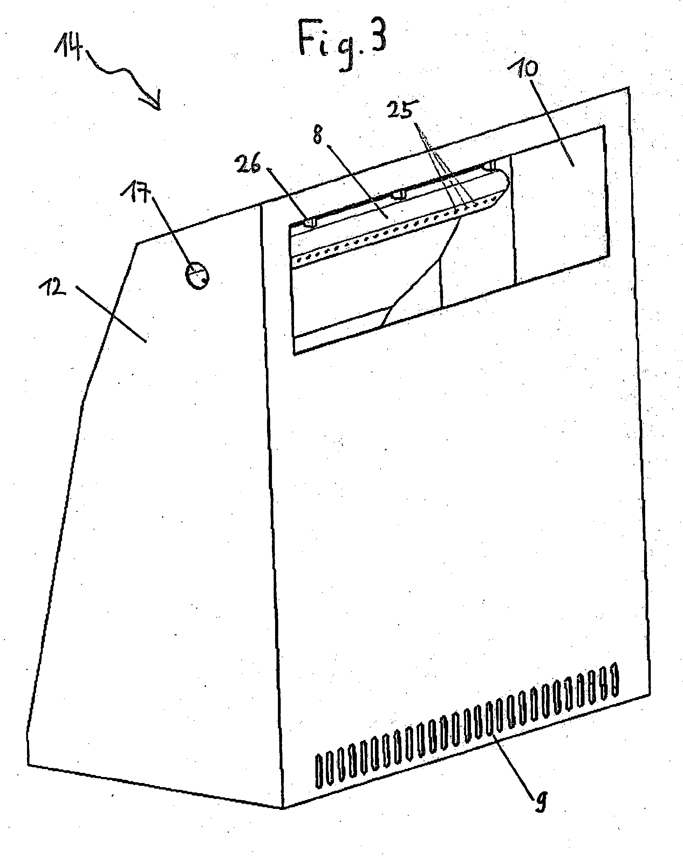

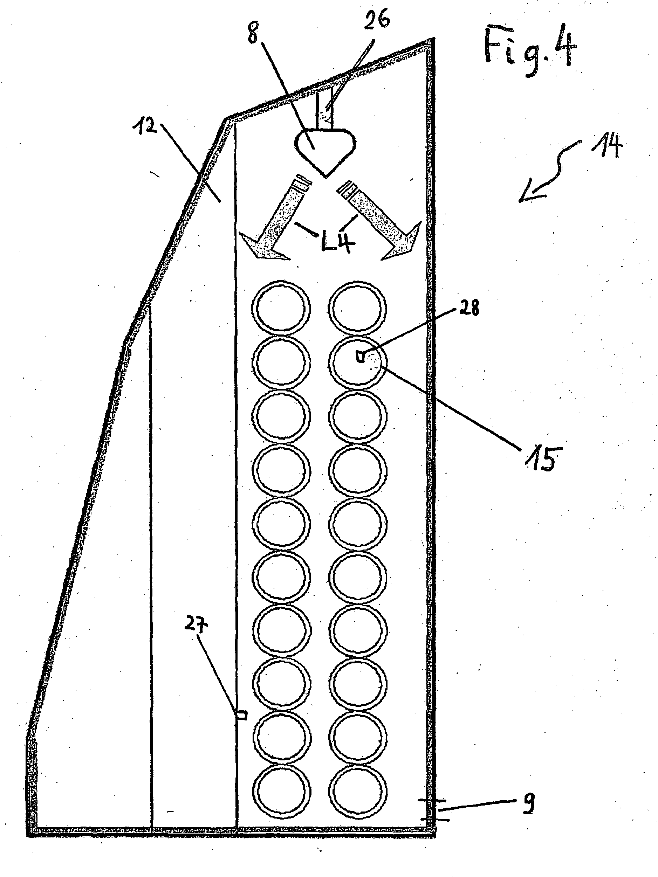

Die an den Kühlluftanschtuss 17 angeschlossene Vorrichtung 8 erstreckt sich gemäß Fig. 3 im Wesentlichen über die gesamte Länge des Magazins, so dass die Kühlluft gut im Magazingehäuse 12 verteilen werden kann. Die Vorrichtung 8 weist mehrere Luftaustrittsöffnungen 25 zur Abgabe der Kühlluft auf, die insbesondere einen radialen Luftaustritt innerhalb des Magazingehäuses 12 ermöglichen. Insofern kann die Vorrichtung 8 als Radialverteiler ausgestaltet sein. Die Vorrichtung 8 weist an zwei gegenüberliegenden Seiten Luftaustrittsöffnungen 25 auf, so dass die Kühlluft in mehreren, insbesondere rechtwinklig zueinander stehenden, Richtungen L4 abgegeben werden kann (Fig. 4). Sie ist innerhalb des Treibladungsmagazins 14 an der Deckenwand des Magazingehäuses 12 befestigt.

Die Vorrichtung 8 in Form des gezeigten Radialverteilers ist für die Ausgestaltung der Erfindung nicht zwingend notwendig. Eine einfache Vorrichtung zur Abgabe von Kühlluft würde auch durch eine Öffnung im Magazingehäuse 12 erreicht werden, die an ein Kühlluftsystem anschließbar ist und über die Kühlluft in das Treibladungsmagazin 14 abgegeben werden kann. Die von der Vorrichtung 8 abgegebene Kühlluft strömt in Pfeilrichtung L4 nach unten über die Treibladungen 15 hinweg und tritt über ein Gitter mit Austrittsöffnungen 9 im Bodenbereich des Magazingehäuses 12 aus. Dabei sind die Austrittsöffnungen 9 in der gleichen Seitenwand angeordnet wie die Öffnungen 10, d.h. in einer dem Kampfraum des Kampfraumgehäuses 13 zugewandten Seitenwand. Die Austrittsöffnungen 9 liegen in einer Seitenwand des Magazingehäuses, die rechtwinklig zu der Seitenwand mit dem Kühlluftanschluss 17 liegt.

Der Kühlluftanschluss 17 der Vorrichtung 8 zur Abgabe und Verteilung der Kühlluft ist an eine Luftzuführungsleitung 6 eines Kühlluftverteilungssystems 1 des Kampfraumes 13 angeschlossen. Am Ende der Luftzuführungsleitung 6 liegt eine Öffnung 7, welcher dem Kühlluftanschluss 17 gegenüberliegt. Über diese Kupplung kann die Kühlluft aus dem Kampfraum in das Magazingehäuse 12 hineingeführt werden.

Es ist möglich, die Kühlluftleitung zu den Treibladungen aus zwei Leitungsabschnitten aufzubauen. Ein erster Leitungsabschnitt 6 ist durch das Kampfraumgehäuse 13 geführt, während ein zweiter Leitungsabschnitt 8 durch das Magazingehäuse 12 geführt ist. Zwischen den Leitungsabschnitten 6 und 8 ist eine lösbare Kupplung zur Verbindung der Abschnitte angeordnet.

Die Luftzuführungsleitung 6 ist im Bodenbereich des Kampfraumgehäuses 13 an eine Hauptleitung 1 des Kühlluftsystems 1, welches Schläuche und/oder Rohre zur Luftführung umfasst, angeschlossen.

Das Kühlluftverteilungssystem 1 für den Kampfraum innerhalb des Kampfraumgehäuses 13 ist folgendermaßen aufgebaut: die Kühlluft wird aus einem nicht dargestellten Kühlaggregat, das unterhalb des Kampfraumgehäuses 13, beispielsweise in einer Fahrzeugwanne angeordnet sein kann, in Pfeilrichtung L6 in die Zuführungsleitung 1 hineingeführt, die sich vom Bodenbereich des Kampfraumgehäuses 13 bis in den Bereich unmittelbar unter dem Dach des Kampfraumgehäuses 13 erstreckt und dort an eine Luftaustrittsvorrichtung 2 angeschlossen ist. Die Anordnung dieser Luftaustrittsvorrichtung 2 ist derart, dass die Luft in nicht dargestellter Weise in Längsrichtung des Kampfraumes verteilt in Pfeilrichtung L1 in den in Fig. 2 linken Seitenbereich SB des Kampfraums hinein und dort mittels einer Leitfläche 3 abwärts geführt wird. Die Leitfläche 3 kann dabei als Leitblech ausgebildet sein. Sie kann aber auch Teil der Seitenwand eines im Kampfraum angeordneten Gerätes oder ein Teil der Innenauskleidung sein. Die im Seitenbereich SB abwärts geführte Luft wird dann in Pfeilrichtung L2 in den Mittenbereich MB des Kampfraumes geführt und strömt dort in Pfeilrichtung L3 nach oben zu einer Luftaustrittsöffnung 4 im Dach des Kampfraumgehäuses 13.

Wie Fig. 2 zu entnehmen, wird der Kampfraum des Kampfraumgehäuses 13 hierdurch von zwei sich im Mittenbereich MB vereinigenden Kühlluftströmen durchsetzt, von denen einer zur Kühlung des Kampfraums in den Pfeilrichtungen L1 und L2 geführt ist, während der andere zur gezielten Kühlung des Treibladungsmagazins 14 das Magazingehäuse 12 in den Pfeilrichtungen L4 und L5 durchströmt und dann in den Kampfraum eintritt und so zur Kühlung des Kampfraumes mit beiträgt.

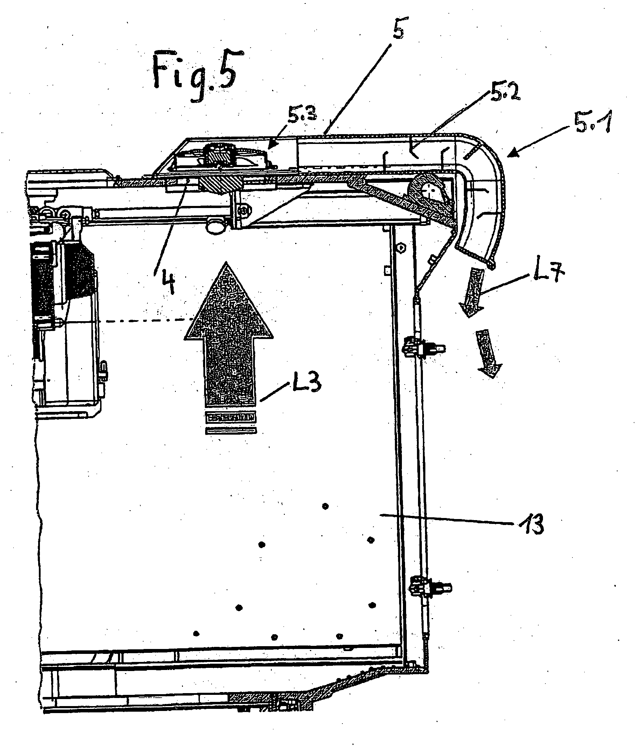

Um eine gesicherte und ballistisch geschützte Abführung der austretenden Kühlluft zu gewährleisten, ist auf dem Dach des Kampfraumgehäuses 13 über der Austrittsöffnung 4 eine Austrittseinrichtung 5 angeordnet, die wie den Fig. 1 und 5 zu entnehmen, ein ballistisch geschütztes Gehäuse mit einem zum hinteren Rand des Kampfraumgehäuses 13 geführten und dort nach unten abgebogenen Austrittsrohr 5.1 besitzt. In der Austrittsöffnung 4 ist innerhalb des Gehäuses eine Axiallüfter 5.3 angeordnet, durch den die Kühlluft aus dem Kampfraum durch die Austrittsöffnung 4 abgezogen und in das Austrittsrohr 5.1 gefördert wird. Im Austrittsrohr 5.1 sind Filterelemente 5.2 angeordnet, um das Eindringen von Staub und Schmutz in den Kampfraum zu verhindern. Die Luft tritt aus dem Austrittsrohr 5.1 in Pfeilrichtung L7 abwärts gerichtet aus.

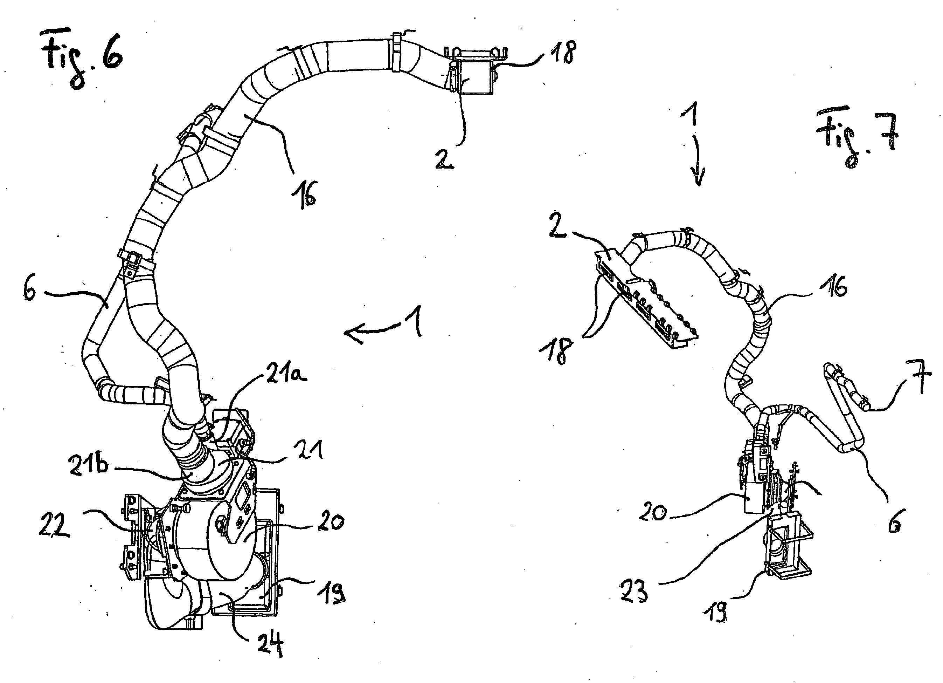

Die Figuren 6 und 7 zeigen das Kühlluftverteilungssystem 1. In der Wanne des Fahrzeugs ist ein nicht dargestellter Kühtlufterzeuger angeordnet, über den ein Aufsatzelement 19 mittels Bändern aufgesetzt wird, um die Kühlluft weiterzuleiten. Von dem Aufsatzelement 19 führt ein Leitungsabschnitt 24 zu einem wannenfesten Übergabestutzen 22. In einer Indexstellung des drehbaren Geschützturmes liegt dem Übergabestutzen 22 ein luftansaugender Lüfter 20 gegenüber, der turmseitig angeordnet ist, so dass der Luftübergabestutzen 22 und der Lüfter 20 die Luftübergabestelle 23 zwischen Wanne und dem sich drehenden Kampfraum bilden.

An dem Lüfter 20 ist ein Y-Verteiler 21 angeordnet, dessen einer Ausgang 21b zu der Hauptleitung 16 führt, die am Ende mit der Luftaustrittsvorrichtung 2 verbunden ist. Die Luftaustrittsvorrichtung 2 weist mehrere seitlich weisende Luftöffnungen 18 auf. An der zweiten Öffnung 21 a des Y-Verteilers 21 ist die Zweigleitung 6 angeordnet, die endseitig zur Öffnung 7 des Kampfraumgehäuses und somit zur kühlbaren Treibladungskassette 14 führt.

## Patentansprüche

1. Treibladungsmagazin mit einer Vorrichtung (8) zur Verteilung und/oder Abgabe von Kühlluft, wobei das Treibladungsmagazin ein Magazingehäuse (12) aufweist, in dem mehrere Treibladungen (15) anordbar sind, sowie einen Kühlluftanschluss (17) und mindestens eine Luftaustrittsöffnung (9) und wobei zur Kühlung der Treibladungen die Vorrichtung (8) zur Verteilung und/oder Abgabe von Kühlluft in dem Treibladungsmagazin oder in seiner unmittelbaren Nähe angeordnet ist.

2. Treibladungsmagazin nach Anspruch 1, **dadurch gekennzeichnet, dass** die Vorrichtung (8) zur Verteilung und/oder Abgabe von Kühlluft an ein externes Kühlluftverteilungssystem (1) anschließbar ist.

3. Treibladungsmagazin nach einem der vorhergehenden Ansprüche, **dadurch gekennzeichnet, dass** die Vorrichtung (8) zur Verteilung und/oder Abgabe von Kühlluft in der oberen Hälfte des Magazingehäuses (12) angeordnet ist, wobei in der unteren Hälfte des Magazingehäuses (12) mindestens eine Luftaustrittsöffnung (9) angeordnet ist, über welche die Kühlluft aus dem Magazingehäuse (12) herausführbar ist.

4. Schießmodul, insbesondere Turm einer Panzerhaubitze oder eines Kampfpanzers, umfassend einen Kampfraum mit einem Kampfraumgehäuse (13), in dem eine Waffe (W) angeordnet ist, **dadurch gekennzeichnet, dass** das Schießmodul ein Treibladungsmagazin (14) nach einem der vorhergehenden Ansprüche aufweist.

5. Schießmodul nach Anspruch 4, **dadurch gekennzeichnet, dass** die Vorrichtung (8) zur Verteilung und/oder Abgabe von Kühlluft im Bereich des Treibladungsmagazins (14) angeordnet ist, und über eine Luftzuführungsleitung (6) an ein im Kampfraumgehäuse (13) angeordnetes Kühlluftverteilungssystem (1) angeschlossen ist.

6. Schießmodul nach Anspruch 5, **gekennzeichnet durch** eine Luftzuführungleitung (6), **durch** die Kühlluft über einen Kühlluftanschluss (17), insbesondere eine Öffnung in dem Magazingehäuse (12), vom Kühlluftverteitungssystem des Kampfraumgehäuses (13) zu der Vorrichtung (8) zur Verteilung und/oder Abgabe zuführbar ist.

7. Schießmodul nach einem der Ansprüche 5 oder 6, **dadurch gekennzeichnet, dass** das Magazingehäuse (12) Luftaustrittsöffnungen (9) aufweist, die an einer dem Innenraum des Kampfraumgehäuses (13) zugewandten Seite des Magazingehäuses (12) angeordnet sind.

8. Schießmodul nach einem der Ansprüche 4 bis 7, **dadurch gekennzeichnet, dass** das Magazingehäuse (12) an einer Außenwand des Kampfraumgehäuses (13) abnehmbar oder abschwenkbar angeordnet ist.

9. Schießmodul nach einem der Ansprüche 4 bis 8, **dadurch gekennzeichnet, dass** ein im Kampfraumgehäuse (13) angeordnetes Kühlluftverteilungssystem (1) eine Luftaustrittsvorrichtung (2) besitzt, die in einem oberen Bereich des Kampfraumgehäuses (13) derart angeordnet ist, dass die Kühlluft in mindestens einen Seitenbereich (SB) des Kampfraumgehäuses (13) hineinführbar ist, und dass der Kampfraum derart ausgestaltet ist, dass die Kühlluft im Seitenbereich (SB) des Kampfraumgehäuses (13) mittels mindestens einer Leitfläche (3) nach unten führbar ist und im Mittenbereich (MB) des Kampfraumgehäuses (13) nach oben führbar ist.

10. Schießmodul nach Anspruch 9, **dadurch gekennzeichnet, dass** die Luftaustrittsvorrichtung (2) unter dem Dach des Kampfraumgehäuses (13) angeordnet ist.

11. Schießmodul nach Anspruch 9 oder 10, **dadurch gekennzeichnet, dass** im oberen Mittenbereich (MB) die Kühlluft über eine Abluftöffnung (4) aus dem Kampfraumgehäuse (13) führbar ist.

12. Schießmodul nach Anspruch 11, **dadurch gekennzeichnet, dass** die Abluftöffnung (4) in einer, auf dem Kampfraumgehäuse (13) angeordneten, insbesondere battistisch geschützten, Ablufteinrichtung (5) angeordnet ist.

13. Schießmodul nach einem der Ansprüche 10 bis 12, **dadurch gekennzeichnet, dass** die Kühlluft in beiden Seitenbereichen (SB) des Kampfraumes nach unten führbar ist.

14. Schießmodul nach Anspruch 5 und einem der Ansprüche 10 bis 13, **dadurch gekennzeichnet, dass** die Luftzuführungsleitung (6) zum Treibladungsmagazin (14) im Bodenbereich des Kampfraumgehäuses (13) an eine Hauptleitung (16) des Kampfraumgehäuses (13) angeschlossen ist.

## Claims

1. Propellant magazine with a device (8) for the distribution and/or the delivery of cooling air, whereby the propellant magazine comprises a magazine housing (12) in which a number of propellants (15) can be arranged, together with a cooling air connection (17) and at least one air outlet opening (9) and whereby to cool the propellants the device (8) for the distribution and/or the delivery of cooling air is arranged inside the propellant magazine or in its immediate vicinity.

2. Propellant magazine according to claim 1, **characterised in that** the device for the distribution and/or delivery of cooling air can be connected to an external cooling air distribution system (1).

3. Propellant magazine according to either of the preceding claims, **characterised in that** the device (8) for the distribution and/or delivery of cooling air is arranged in the upper half of the magazine housing (12), whereby in the lower half of the magazine housing (12) there is at least one air outlet opening (9) through which the cooling air can flow out of the magazine housing (12).

4. Firing module, especially a turret on a howitzer or a tank, comprising a combat area with a combat area housing (13), in which a weapon (W) is arranged, **characterised in that** the firing module comprises a propellant magazine (14) according to any one of the preceding claims.

5. Firing module according to claim 4, **characterised in that** the device (8) for the distribution or delivery of cooling air is arranged in the area of the propellant magazine (14) and is connected to a cooling air distribution system (1) arranged in the combat area housing (13) via an air flow line (6).

6. Firing module according to claim 5, **characterised by** an air flow inlet (6), through which the cooling air can be directed via a cooling air connection (17), in particular an opening in the magazine housing (12), from the cooling air distribution system of the combat area housing (13) to the device (8) for distribution and/or delivery.

7. Firing module according to claim 5 or 6, **characterised in that** the magazine housing (12) comprises air outlet openings (9), which are arranged on a side of the magazine housing (12) facing the inner area of the combat area housing (13).

8. Firing module according to any one of the preceding claims 4 to 7, **characterised in that** the magazine housing (12) is arranged on an outer wall of the combat area housing (13) in such a way that it can be removed or swivelled away.

9. Firing module according to any one of the preceding claims 4 to 8, **characterised in that** a cooling air distribution system (1) arranged in the combat area housing (13) has an air outlet device (2), which is arranged in an upper part of the combat area housing (13) in such a manner that the cooling air can be introduced into at least one side section (SB) of the combat area housing (13) and that the combat area is designed in such a way that the cooling air in the side section (SB) of the combat area housing (13) can be directed downwards by at least one baffle plate (3) and can be directed upwards in the central section (MB) of the combat area housing (13).

10. Firing module according to claim 9, **characterised in that** the air outlet device (2) is arranged under the roof of the combat area housing (13).

11. Firing module according to claim 9 or 10, **characterised in that** in the central section (MB) the cooling air can be conducted through a used air outlet (4) out of the combat area housing (13).

12. Firing module according to claim 11, **characterised in that** the air outlet (4) is arranged in an air outlet device (5) on the combat area housing (13), which is protected in particular by an anti-ballistic protection.

13. Firing module according to any one of the preceding claims 10 to 12, **characterised in that** in both side sections (SB) of the combat area housing (13) the cooling air can be directed downwards.

14. Firing module according to claim 5 and to any one of the preceding claims 10 to 13, **characterised in that** the air flow inlet (6) to the propellant magazine (14) in the bottom part of the combat area housing (13) is connected to a main conduit (16) of the combat area housing (13).

## Revendications

1. Magasin à charges propulsives comprenant un dispositif (8) servant à répartir et/ou à distribuer de l'air de refroidissement, dans lequel le magasin à charges propulsives présente une enceinte de magasin (12), dans laquelle plusieurs charges propulsives (15) peuvent être disposées, ainsi qu'un raccordement d'air de refroidissement (17) et au moins une ouverture de sortie d'air (9), et dans lequel le dispositif (8) servant à répartir et/ou à distribuer de l'air de refroidissement est disposé, aux fins du refroidissement des charges propulsives, dans le magasin à charges propulsives ou à proximité directe de ce dernier.

2. Magasin à charges propulsives selon la revendication 1, **caractérisé en ce que** le dispositif (8) servant à répartir et/ou à distribuer de l'air de refroidissement peut être raccordé à un système de répartition d'air de refroidissement (1) externe.

3. Magasin à charges propulsives selon l'une quelconque des revendications précédentes, **caractérisé en ce que** le dispositif (8) servant à répartir et/ou à distribuer de l'air de refroidissement est disposé dans la moitié supérieure de l'enceinte de magasin (12), dans lequel au moins une ouverture de sortie d'air (9) est disposée dans la moitié inférieure de l'enceinte de magasin (12), par l'intermédiaire de laquelle l'air de refroidissement peut être guidé de manière à sortir de l'enceinte de magasin (12).

4. Module de tir, en particulier tourelle d'un obusier blindé ou d'un char de combat, comprenant une chambre de combat pourvue d'une enceinte de chambre de combat (13), dans lequel est disposée une arme (W), **caractérisé en ce que** le module de tir présente un magasin à charges propulsives (14) selon l'une quelconque des revendications précédentes.

5. Module de tir selon la revendication 4, **caractérisé en ce que** le dispositif (8) servant à répartir et/ou à distribuer de l'air de refroidissement est disposé dans la zone du magasin à charges propulsives (14) et est raccordé, par l'intermédiaire d'une conduite d'amenée d'air (6), à un système de répartition d'air de refroidissement (1) disposé dans l'enceinte de chambre de combat (13).

6. Module de tir selon la revendication 5, **caractérisé par** une conduite d'amenée d'air (6), par laquelle de l'air de refroidissement peut être amené par l'intermédiaire d'un raccordement d'air de refroidissement (17), en particulier par l'intermédiaire d'une ouverture dans l'enceinte de magasin (12), du système de répartition d'air de refroidissement de l'enceinte de chambre de combat (13), jusqu'au dispositif (8) servant à la répartition et/ou à la distribution.

7. Module de tir selon l'une quelconque des revendications 5 ou 6, **caractérisé en ce que** l'enceinte de magasin (12) présente des ouvertures de sortie d'air (9), qui sont disposées au niveau d'un côté, tourné vers l'espace intérieur de l'enceinte de chambre de combat (13), de l'enceinte de magasin (12).

8. Module de tir selon l'une quelconque des revendications 4 à 7, **caractérisé en ce que** l'enceinte de magasin (12) est disposée de manière à pouvoir être retiré ou retiré par pivotement au niveau d'une paroi extérieure de l'enceinte de chambre de combat (13).

9. Module de tir selon l'une quelconque des revendications 4 à 8, **caractérisé en ce qu'**un système de répartition d'air de refroidissement (1) disposé dans l'enceinte de chambre de combat (13) comporte un dispositif de sortie d'air (2), qui est disposé dans une zone supérieure de l'enceinte de chambre de combat (13) de telle manière que l'air de refroidissement peut être introduit dans au moins une zone latérale (SB) de l'enceinte de chambre de combat (13), et **en ce que** la chambre de combat est configurée de telle manière que l'air de refroidissement peut être guidé vers le bas dans la zone latérale (SB) de l'enceinte de chambre de combat (13) au moyen d'au moins une face conductrice (3) et peut être guidé vers le haut dans la zone centrale (MB) de l'enceinte de chambre de combat (13).

10. Module de tir selon la revendication 9, **caractérisé en ce que** le dispositif de sortie d'air (2) est disposé sous le toit de l'enceinte de chambre de combat (13).

11. Module de tir selon la revendication 9 ou 10, **caractérisé en ce que** l'air de refroidissement peut être guidé par l'intermédiaire d'une ouverture d'évacuation d'air (4) de l'enceinte de chambre de combat (13) dans la zone centrale (MB) supérieure.

12. Module de tir selon la revendication 11, **caractérisé en ce que** l'ouverture d'évacuation d'air (4) est disposée dans un système d'évacuation d'air (5) disposé sur l'enceinte de chambre de combat (13), en particulier à protection balistique.

13. Module de tir selon l'une quelconque des revendications 10 à 12, **caractérisé en ce que** l'air de refroidissement peut être guidé vers le bas dans les deux zones latérales (SB) de la chambre de combat.

14. Module de tir selon la revendication 5 et selon l'une quelconque des revendications 10 à 13, **caractérisé en ce que** la conduite d'amenée d'air (6) menant au magasin à charges propulsives (14) est raccordée, dans la zone de fond de l'enceinte de chambre de combat (13), à une conduite principale (16) de l'enceinte de chambre de combat (13).
